# EUROPEAN PATENT SPECIFICATION

(11) **EP 4 080 021 B1**
(45) Date of publication and mention of the grant of the patent: **07.02.2024**
(21) Application number: 21212310.3
(22) Date of filing: 03.12.2021
(51) Int. Cl.: F01M 11/00, F01M 1/02, F01M 11/02, B62J 31/00, F02B 61/02, F01M 1/12

(54) **INTERNAL COMBUSTION ENGINE AND STRADDLED VEHICLE**
BRENNKRAFTMASCHINE UND GRÄTSCHSITZFAHRZEUG
MOTEUR À COMBUSTION INTERNE ET VÉHICULE À ENFOURCHER

(30) Priority: 23.04.2021 JP 2021073042
(43) Date of publication of application: 26.10.2022
(73) Proprietor: Yamaha Hatsudoki Kabushiki Kaisha, Iwata-shi, Shizuoka 438-8501 (JP)
(72) Inventor: Wakuda, Masahiro, Iwata-shi, Shizuoka-ken (JP); Konya, Tsubasa, Iwata-shi, Shizuoka-ken (JP); Iida, Yoshihiro, Iwata-shi, Shizuoka-ken (JP)
(74) Representative: Grünecker Patent- und Rechtsanwälte PartG mbB

(56) References cited:
- EP-A1- 3 889 018
- WO-A1-2020/111188
- JP-A- 2009 243 437
- US-A1- 2008 060 606
- US-A1- 2015 167 591

## Description

The present invention relates to an internal combustion engine and a straddled vehicle using dry-sump lubrication.

An internal combustion engine that uses dry-sump lubrication includes an oil pan, an oil tank, a scavenge pump that pumps oil from the oil pan to the oil tank, and a feed pump that pumps oil from the oil tank to sliding parts of the internal combustion engine. Internal combustion engines have been known in the art, in which an oil tank is formed between a crank case and a crank case cover arranged sideward of the crank case. With such an internal combustion engine, the oil tank is arranged inside the crank case cover. Therefore, the internal combustion engine can be made smaller.

For example, such an internal combustion engine is disclosed in JP H4-298618 A, and JP 2009 243437 A, for example. With the internal combustion engine disclosed in JP H4-298618 A, an inlet of the oil tank is formed at the top of the oil tank. The scavenge pump and the inlet of the oil tank are connected by an arc-shaped oil channel arranged around the clutch.

Since the diameter of the oil channel is relatively small, the flow velocity of oil in the oil channel is relatively high. The diameter of the inlet of the oil tank is relatively small. With the internal combustion engine described above, oil tends to rapidly flow from the scavenge pump toward the oil tank. Therefore, bubbles may be mixed in the oil flowing into the oil tank. However, in order for the feed pump to stably pump oil out of the oil tank, it is desirable to have as few bubbles as possible in oil in the oil tank.

It is an object of the present invention to provide an internal combustion engine, with which it is possible to suppress mixing of bubbles in oil in the oil tank. According to the present invention said object is solved by an internal combustion engine having the features of independent claim 1. Preferred embodiments are laid down in the dependent claims.

An internal combustion engine disclosed herein includes: a crank case having a first side wall and a bottom wall that defines an oil pan; a crank case cover having a second side wall arranged sideward of the first side wall of the crank case; and a partition side wall arranged between the first side wall of the crank case and the second side wall of the crank case cover. An oil tank is formed between the first side wall and the partition side wall. An auxiliary tank is formed between the second side wall and the partition side wall. An oil tank inlet that connects together the auxiliary tank and the oil tank is formed between the first side wall and the second side wall. The internal combustion engine a scavenge pump having a first intake port that communicates with the oil pan and a discharge port that communicates with the auxiliary tank. The internal combustion engine includes a feed pump having a second intake port that communicates with the oil tank.

With the internal combustion engine described above, the auxiliary tank is provided upstream of the oil tank. In the auxiliary tank, the flow velocity of oil decreases. This suppresses a rapid flow of oil into the oil tank. Moreover, gas-liquid separation is performed in the auxiliary tank. Therefore, it is possible to suppress mixing of bubbles in oil in the oil tank.

The auxiliary tank may have an auxiliary tank inlet that communicates with the discharge port of the scavenge pump. An opening area of the oil tank inlet may be larger than an opening area of the auxiliary tank inlet.

Thus, the flow velocity of oil when passing through the oil tank inlet is lower than the flow velocity of oil when passing through the auxiliary tank inlet. The flow velocity of oil when passing through the oil tank inlet is relatively low. This suppresses a rapid flow of oil into the oil tank. Therefore, it is possible to suppress mixing of bubbles in oil in the oil tank.

The auxiliary tank may be formed so that a flow path cross-sectional area of the auxiliary tank increases gradually toward the oil tank inlet.

Thus, in the auxiliary tank, the flow velocity of oil decreases gradually toward the oil tank inlet. This suppresses a rapid flow of oil into the oil tank. Therefore, it is possible to suppress mixing of bubbles in oil in the oil tank.

The partition side wall may be formed of a gasket sandwiched between the crank case and the crank case cover.

Thus, it is possible to easily form the oil tank and the auxiliary tank.

The oil tank inlet may be formed upward of the partition side wall.

Thus, oil flows into the oil tank from the auxiliary tank by coming over the partition side wall.

The auxiliary tank is formed so that a flow path cross-sectional area of the auxiliary tank increases gradually in the upward direction.

Thus, in the auxiliary tank, the flow velocity of oil decreases gradually in the upward direction. This suppresses a rapid flow of oil into the oil tank.

The internal combustion engine may include a crank shaft rotatably supported on the crank case. The first side wall, the second side wall and the partition side wall are perpendicular to an axis of the crank shaft.

The internal combustion engine may include a generator connected to an end portion of the crank shaft. The crank case may have an arc-shaped first vertical wall located outward in a radial direction of the generator as viewed from an axis direction of the crank shaft. The crank case cover may have an arc-shaped second vertical wall located outward in the radial direction of the generator as viewed from the axis direction of the crank shaft. The first vertical wall may define a part of the oil tank. The second vertical wall may define a part of the auxiliary tank.

Thus, the oil tank and the auxiliary tank are arranged next to the generator.

A straddled vehicle disclosed herein includes the internal combustion engine described above.

The crank case may have a first front wall. The crank case cover may have a second front wall. The first front wall may define a part of the oil tank. The second front wall may define a part of the auxiliary tank.

When the straddled vehicle runs, wind blows, coming from the front side, the crank case and the crank case cover. With this wind, it is possible to cool oil in the oil tank and in the auxiliary tank.

The straddled vehicle may include cooling fins provided on the first front wall of the crank case and/or the second front wall of the crank case cover.

Thus, with wind coming from the front side, it is possible to efficiently cool oil in the oil tank and in the auxiliary tank.

### Advantageous Effects Of Invention

According to the present invention, it is possible to provide an internal combustion engine, with which it is possible to suppress mixing of bubbles in oil in the oil tank.

### BRIEF DESCRIPTION OF THE DRAWINGS

FIG. 1 is a right side view of a motorcycle according to one embodiment.
FIG. 2 is a front view of an internal combustion engine.
FIG. 3 is a left side view of a crank case and a crank case cover.
FIG. 4 is a left side view of the crank case.
FIG. 5 is a left side view of a gasket and the crank case.
FIG. 6 is a partial enlarged perspective view showing the inside of the internal combustion engine, with the crank case cover partially removed.
FIG. 7 is a cross-sectional view showing an internal configuration of the internal combustion engine as viewed from the right side.
FIG. 8 is an oil circulation circuit diagram.
FIG. 9 is a horizontal cross-sectional view showing an example of a configuration of a guide rib.
FIG. 10 is a horizontal cross-sectional view showing an example of another configuration of a guide rib.
FIG. 11 is a front view of a crank case and a crank case cover having cooling fins.

### DETAILED DESCRIPTION OF THE PREFERRED EMBODIMENTS

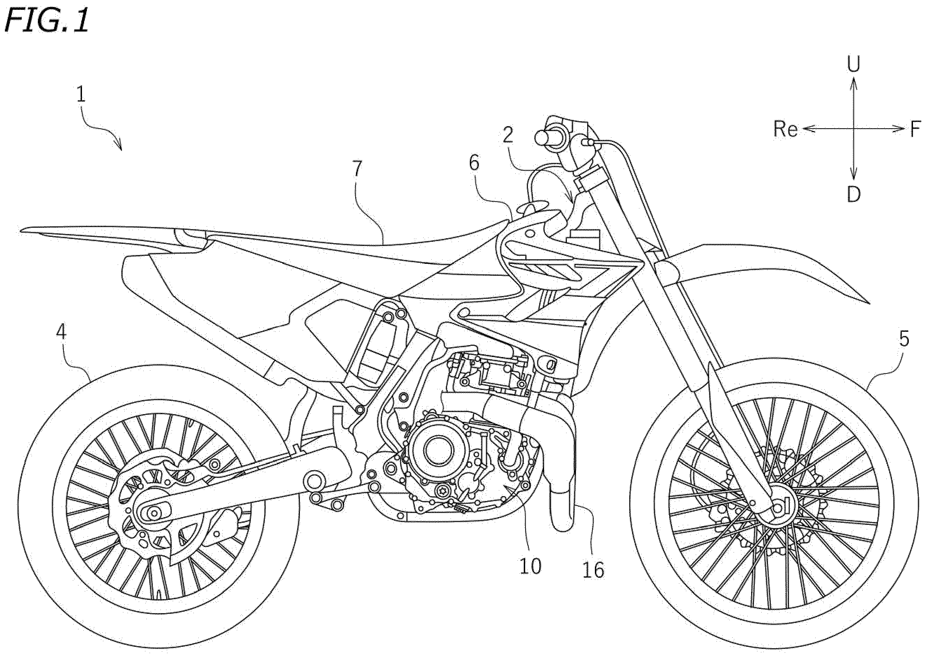

An embodiment will now be described with reference to the drawings. FIG. 1 is a right side view of a motorcycle 1, which is an example of a straddled vehicle. The motorcycle 1 includes a vehicle body frame 2, an internal combustion engine (hereinafter referred to as an engine) 10 supported on the vehicle body frame 2, a rear wheel 4 driven by the engine 10, a front wheel 5, a fuel tank 6, and a seat 7 in which the rider sits.

The terms front, rear, left, right, up and down, as used in the description below, refer to these directions as viewed from a virtual rider seated on a seat 7 while the motorcycle 1 is standing upright on a horizontal surface with no rider and no load thereon, unless specified otherwise. The designations F, Re, L, R, U and D, as used in the figures, refer to front, rear, left, right, up and down, respectively. The term "forward" refers not only to the direction that extends in the front direction along the vehicle center line, as the vehicle is viewed from above, but also to directions that are inclined from that direction by an angle that is less than 90 degrees in the vehicle left-right direction. Similarly, the term "rearward" refers not only to the direction that extends rearward along the vehicle center line, as the vehicle is viewed from above, but also to directions that are inclined from that direction by an angle that is less than 90 degrees in the vehicle left-right direction. The vehicle front-rear direction F-Re extends along the vehicle center line as the vehicle is viewed from above or viewed from the side. The term "leftward" refers not only to the direction that extends leftward vertical to the vehicle center line, as the vehicle is viewed from above, but also to directions that are inclined from that direction by an angle that is less than 90 degrees in the front-rear direction. The term "rightward" refers not only to the direction that extends rightward vertical to the vehicle center line, as the vehicle is viewed from above, but also to directions that are inclined from that direction by an angle that is less than 90 degrees in the vehicle front-rear direction. The vehicle left-right direction L-R extends in the vehicle width direction as the vehicle is viewed from above or viewed from the front or the rear and relates to the view direction of a rider sitting on the seat of the vehicle. The term "upward" refers not only to the vertically upward direction, as the vehicle is viewed from the side, but also to directions that are inclined from that direction by an angle that is less than 90 degrees in the vehicle front-rear direction. The term "downward" refers not only to the vertically downward direction, as the vehicle is viewed from the side, but also to directions that are inclined from that direction by an angle that is less than 90 degrees in the vehicle front-rear direction. The vehicle up-down direction U-D extends in the vertical direction of the vehicle as the vehicle is viewed from the side or viewed from the front or the rear.

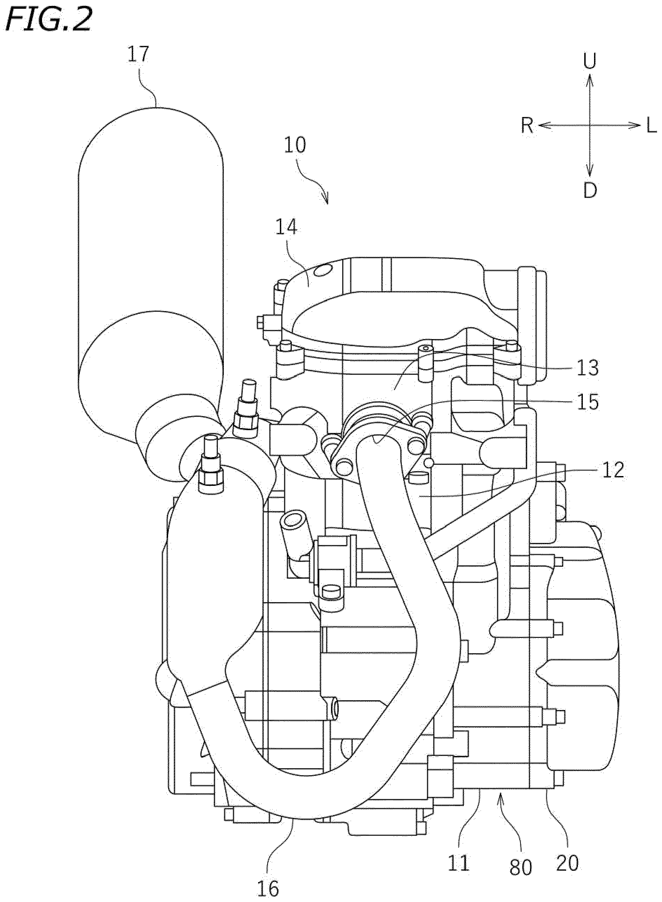

FIG. 2 is a front view of the engine 10. The engine 10 includes a crank case 11, a cylinder body 12 connected to the crank case 11, a cylinder head 13 connected to the cylinder body 12, and a cylinder head cover 14 connected to the cylinder head 13. The cylinder body 12 extends upward from the crank case 11. The cylinder head 13 extends upward from the cylinder body 12. The engine 10 includes a crank case cover 20 connected to the crank case 11. The crank case 11 and the crank case cover 20 together form a case 80. The crank case cover 20 is arranged sideward of the crank case 11. Here, the crank case cover 20 is arranged leftward of the crank case 11.

An intake port (not shown) and an exhaust port 15 are formed on the cylinder head 13. An exhaust pipe 16 is connected to the exhaust port 15. A silencer 17 is connected to a rear end portion of the exhaust pipe 16.

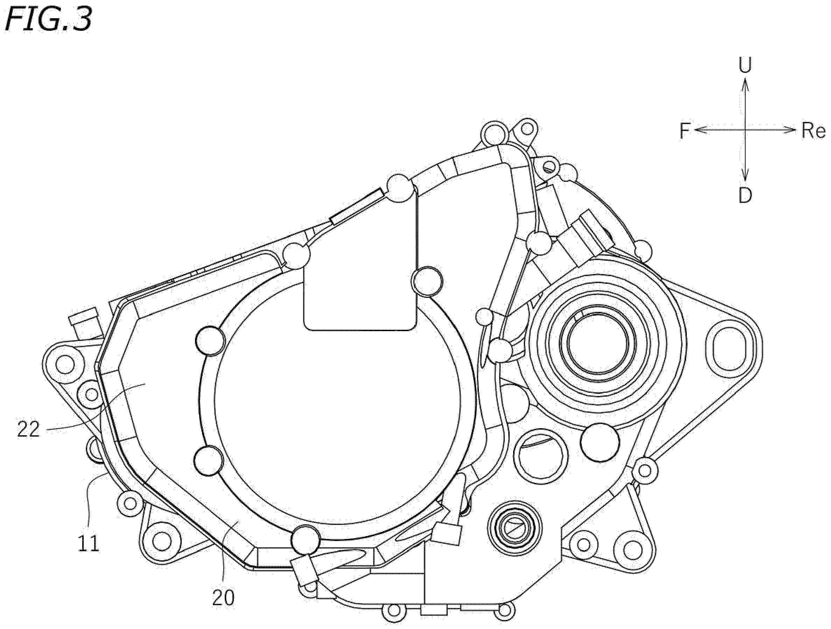

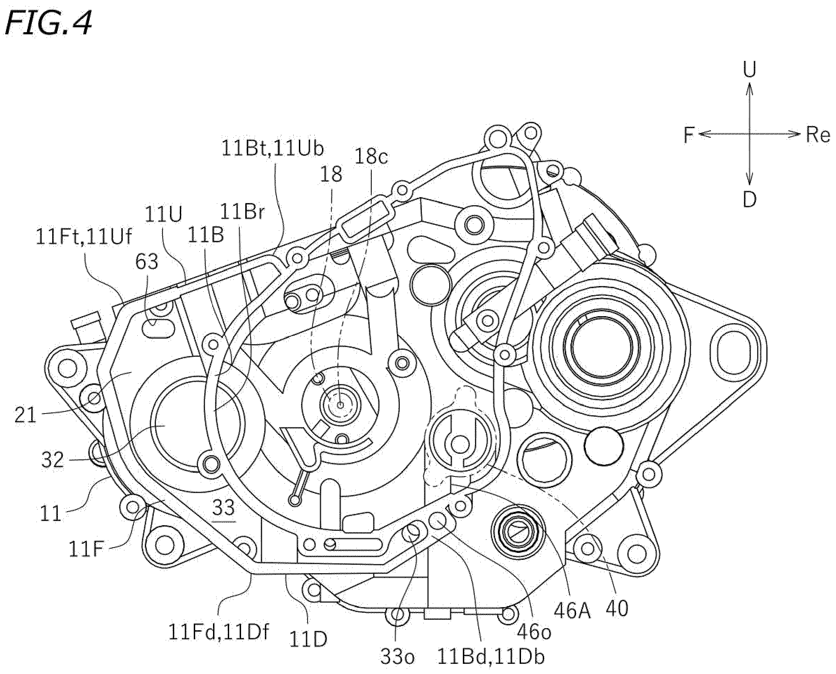

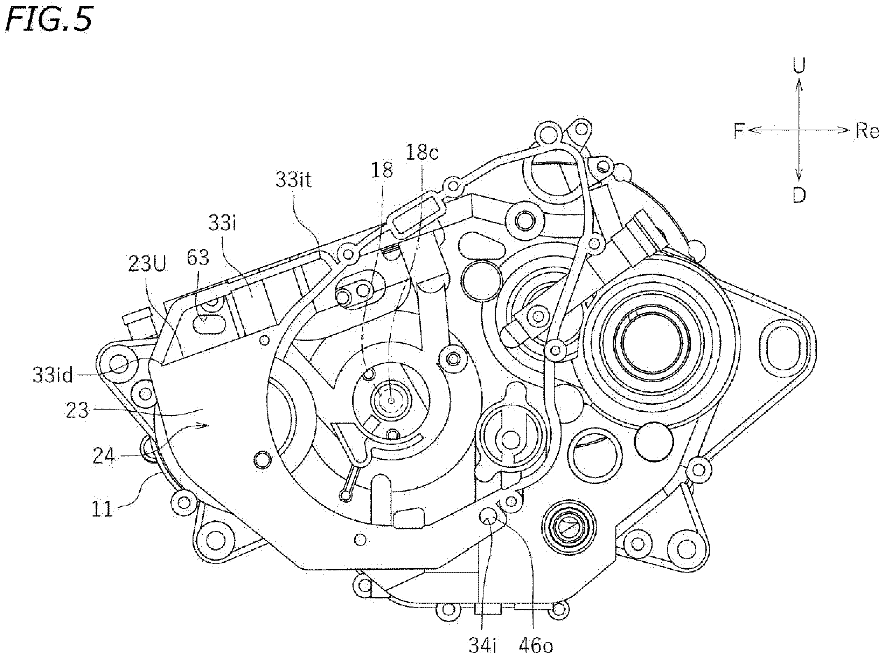

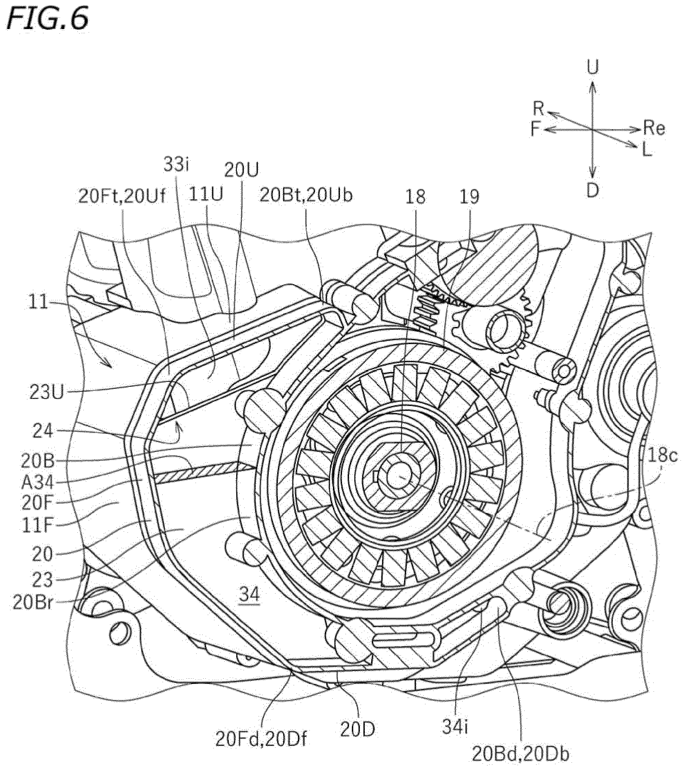

FIG. 3 is a left side view of the crank case 11 and the crank case cover 20 of the engine 10. FIG. 4 is a left side view of the crank case 11. A gasket 24 is sandwiched between the crank case 11 and the crank case cover 20. FIG. 5 is a left side view of the gasket 24 and the crank case 11. FIG. 6 is a partial enlarged perspective view showing the inside of the engine 10, with the crank case cover 20 partially removed.

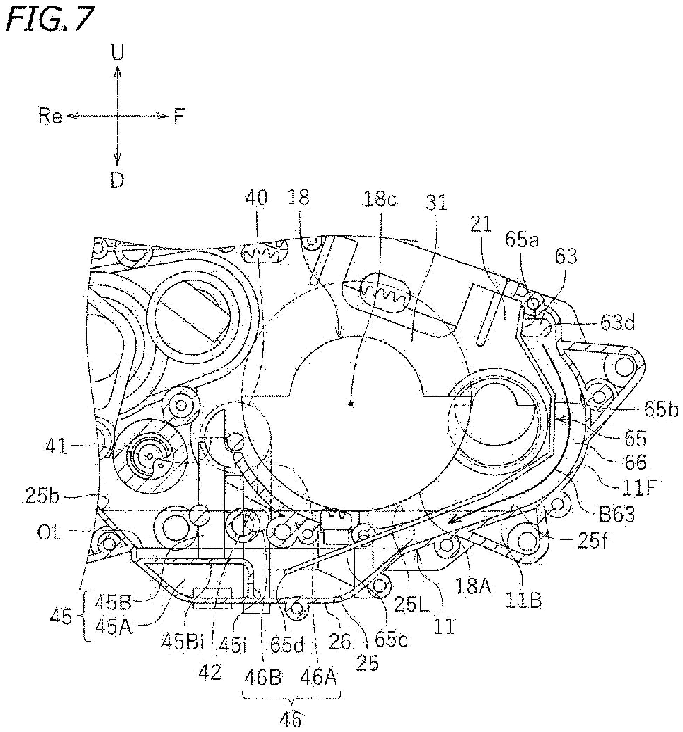

As shown in FIG. 6, the engine 10 includes the crank shaft 18. The crank shaft 18 is rotatably supported on the crank case 11. The crank shaft 18 extends leftward and rightward. A straight line 18c represents the axis of the crank shaft 18. As shown in FIG. 7, the crank shaft 18 includes a crank web 18A.

A generator 19 is connected to an end portion of the crank shaft 18. The generator 19 is connected to the left end portion of the crank shaft 18. As viewed from the axis direction of the crank shaft 18, the generator 19 is formed in a generally circular shape.

As shown in FIG. 4, the crank case 11 has a first side wall 21. The first side wall 21 is a wall that is perpendicular to an axis 18c of the crank shaft 18. The first side wall 21 extends in the up-down direction and the front-rear direction. FIG. 7 is a cross-sectional view showing an internal configuration of the engine 10 as viewed from the right side. A first chamber 31 is defined rightward of the first side wall 21. As shown in FIG. 4, a second chamber 32 is defined leftward of the first side wall 21. The first side wall 21 is arranged inside the crank case 11. The first side wall 21 partitions the inside of the crank case 11 into the first chamber 31 and the second chamber 32.

As shown in FIG. 7, the crank case 11 has a bottom wall 26. The bottom wall 26 defines an oil pan 25 that stores lubricating oil (hereinafter referred to as oil). In FIG. 7, a straight line OL represents an example of the oil surface. For example, the oil surface OL may be the oil surface when the motorcycle 1 is stopped standing upright on a horizontal surface and the engine 10 is stopped. Note however that the height of the oil surface OL varies depending on the amount of oil filled in the engine 10. The height of the oil surface OL varies also depending on the operation status of the engine 10. As used herein, the oil pan 25 refers to a portion of the crank case 11 that is at or below the horizontal plane passing through the lowermost end of the crank web 18A. In FIG. 7, a one-dot-chain line 25L represents the horizontal surface passing through the lowermost end of the crank web 18A. In FIG. 7, the oil pan 25 refers to a portion of the crank case 11 that is at or below the one-dot-chain line 25L. Note that the crank web 18A is formed in a non-circular shape. The position of the lower end of the crank web 18A varies depending on the rotational position of the crank web 18A. The lowermost end of the crank web 18A refers to the lowest end of the lower end of the crank web 18A. The oil pan 25 is depressed downward. The oil pan 25 is provided on the bottom wall of the first chamber 31.

The engine 10 is an internal combustion engine using dry-sump lubrication. The engine 10 includes a scavenge pump 40. The scavenge pump 40 includes an intake port 41 and a discharge port 42. The intake port 41 communicates with the oil pan 25 via an intake path 45.

The intake path 45 includes an intake chamber 45A and a passageway 45B. An inlet 45i is formed on the intake chamber 45A. While there is no particular limitation on the position of the inlet 45i, the inlet 45i is herein formed at the front end of the intake chamber 45A. The inlet 45i serves as an inlet for the intake path 45. The inlet 45i has an opening facing toward the oil pan 25. The inlet 45i communicates between the oil pan 25 and the intake chamber 45A. The passageway 45B extends upward. An opening 45Bi that has an opening facing toward the intake chamber 45A is formed at the lower end of the passageway 45B.

The scavenge pump 40 transfers oil toward an oil tank 33 to be described later. The discharge port 42 of the scavenge pump 40 communicates with the oil tank 33 via a discharge path 46. In the present embodiment, the discharge path 46 includes a passageway 46A extending downward, and a passageway 46B extending leftward from the passageway 46A. As shown in FIG. 4, an outlet 46o of the discharge path 46 is formed on the first side wall 21. The outlet 46o has an opening facing leftward.

As shown in FIG. 3, the crank case cover 20 has a second side wall 22 arranged sideward of the first side wall 21. The second side wall 22 is arranged leftward of the first side wall 21. As with the first side wall 21, the second side wall 22 is perpendicular to the axis 18c of the crank shaft 18. The second side wall 22 extends in the up-down direction and the front-rear direction.

As shown in FIG. 5, the gasket 24 has a partition side wall 23 arranged between the first side wall 21 of the crank case 11 and the second side wall 22 of the crank case cover 20. The partition side wall 23 is arranged leftward of the first side wall 21. The partition side wall 23 is arranged rightward of the second side wall 22. As with the first side wall 21, the partition side wall 23 is perpendicular to the axis 18c of the crank shaft 18. The partition side wall 23 extends in the up-down direction and the front-rear direction.

The oil tank 33 is defined between the first side wall 21 and the partition side wall 23. As shown in FIG. 4, the crank case 11 has a front wall 11F, an upper wall 11U, a lower wall 11D and a rear wall 11B. The front wall 11F, the upper wall 11U, the lower wall 11D and the rear wall 11B extend leftward. An upper end 11Ft of the front wall 11F and a front end 11Uf of the upper wall 11U are connected together. A lower end 11Fd of the front wall 11F and a front end 11Df of the lower wall 11D are connected together. An upper end 11Bt of the rear wall 11B and a rear end 11Ub of the upper wall 11U are connected together. A lower end 11Bd of the rear wall 11B and a rear end 11Db of the lower wall 11D are connected together. The front wall 11F, the upper wall 11U, the lower wall 11D and the rear wall 11B are connected into a loop. The oil tank 33 is defined by the first side wall 21, the partition side wall 23, the front wall 11F, the upper wall 11U, the lower wall 11D and the rear wall 11B. The oil tank 33 is formed in a front portion of the crank case 11. The rear wall 11B has an arc-shaped vertical wall 11Br located outward in the radial direction of the generator 19, as viewed from the axis direction of the crank shaft 18. The vertical wall 11Br defines a part of the oil tank 33. The oil tank 33 is arranged next to the generator 19.

An auxiliary tank 34 is defined between the second side wall 22 and the partition side wall 23. As shown in FIG. 6, the crank case cover 20 has a front wall 20F, an upper wall 20U, a lower wall 20D and a rear wall 20B corresponding to the front wall 11F, the upper wall 11U, the lower wall 11D and the rear wall 11B of the crank case 11, respectively. The front wall 20F, the upper wall 20U, the lower wall 20D and the rear wall 20B extend rightward. An upper end 20Ft of the front wall 20F and a front end 20Uf of the upper wall 20U are connected together. A lower end 20Fd of the front wall 20F and a front end 20Df of the lower wall 20D are connected together. An upper end 20Bt of the rear wall 20B and a rear end 20Ub of the upper wall 20U are connected together. A lower end 20Bd of the rear wall 20B and a rear end 20Db of the lower wall 20D are connected together. The front wall 20F, the upper wall 20U, the lower wall 20D and the rear wall 20B are connected into a loop. The auxiliary tank 34 is defined by the second side wall 22, the partition side wall 23, the front wall 20F, the upper wall 20U, the lower wall 20D and the rear wall 20B. The auxiliary tank 34 is formed in a front portion of the crank case cover 20. The rear wall 20B has an arc-shaped vertical wall 20Br located outward in the radial direction of the generator 19, as viewed from the axis direction of the crank shaft 18. The vertical wall 20Br defines a part of the auxiliary tank 34. The auxiliary tank 34 is arranged next to the generator 19.

As shown in FIG. 5, an auxiliary tank inlet 34i is formed on the gasket 24. The auxiliary tank inlet 34i is a through hole formed in the gasket 24. The auxiliary tank inlet 34i overlaps with the outlet 46o of the discharge path 46 (see FIG. 4). The auxiliary tank inlet 34i is connected to the outlet 46o of the discharge path 46. Here, the auxiliary tank inlet 34i has an opening facing leftward. The auxiliary tank inlet 34i is formed in a lower portion of the auxiliary tank 34. The auxiliary tank inlet 34i is formed in a rear portion of the auxiliary tank 34.

As shown in FIG. 6, an upper edge 23U of the partition side wall 23 is located downward relative to the upper wall 11U of the crank case 11 and the upper wall 20U of the crank case cover 20. An oil tank inlet 33i that connects together the auxiliary tank 34 and the oil tank 33 is formed upward of the partition side wall 23. Oil in the auxiliary tank 34 flows into the oil tank 33 by coming over the partition side wall 23. The opening area of the oil tank inlet 33i is relatively large. As shown in FIG. 5, the opening area of the oil tank inlet 33i is larger than the opening area of the auxiliary tank inlet 34i.

The oil tank inlet 33i is formed upward relative to the auxiliary tank inlet 34i. Oil in the auxiliary tank 34 flows upward toward the oil tank inlet 33i. As shown in FIG. 6, in the upper half portion of the auxiliary tank 34, the interval in the front-rear direction between the front wall 20F and the rear wall 20B of the crank case cover 20 increases gradually in the upward direction. The auxiliary tank 34 is formed so that a flow path cross-sectional area A34 increases gradually in the upward direction. The auxiliary tank 34 is formed so that the flow path cross-sectional area A34 increases gradually toward the oil tank inlet 33i.

As shown in FIG. 4, an oil tank outlet 33o is formed on the crank case 11. The oil tank outlet 33o has an opening facing leftward. The oil tank outlet 33o is formed in a lower portion of the oil tank 33. The oil tank outlet 33o is formed in a rear portion of the oil tank 33.

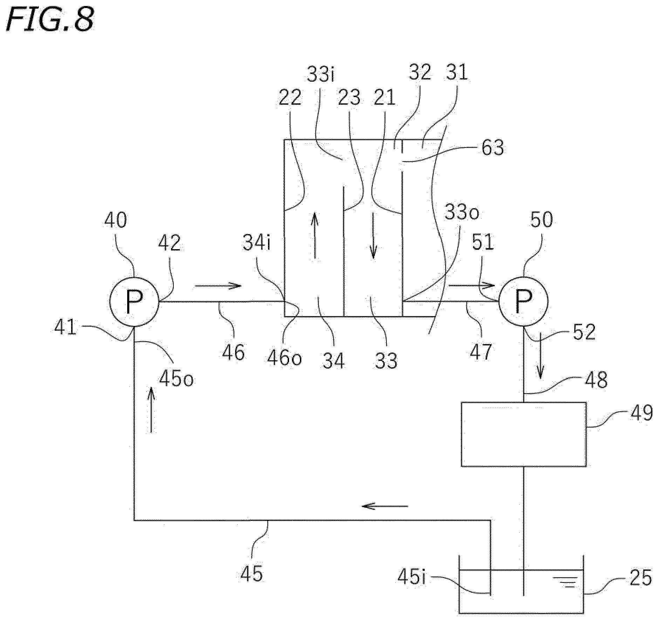

FIG. 8 is an oil circulation circuit diagram. The engine 10 includes a feed pump 50 for supplying oil to sliding parts 49 of the engine 10. The feed pump 50 includes an intake port 51 and a discharge port 52. The oil tank outlet 33o is connected to the intake port 51 of the feed pump 50 via an oil path 47. The discharge port 52 of the feed pump 50 communicates with the sliding parts 49 of the engine 10 via an oil path 48.

As shown in FIG. 4, an oil return hole 63 that connects together the oil tank 33 and the first chamber 31 is formed in an upper portion of the first side wall 21. Note that an upper portion of the first side wall 21 refers to a portion of the first side wall 21 that is upward relative to the middle position thereof in the up-down direction. The first side wall 21 defines the right side of the oil tank 33. An upper portion of the first side wall 21 may be a portion of the oil tank 33 that is upward relative to the middle position thereof in the up-down direction. The oil return hole 63 may be formed at a position that is within 30% of the dimension in the up-down direction of the first side wall 21 from the upper end of the first side wall 21, or may be formed at a position that is within 20%. The oil return hole 63 may be formed at a position that is within 30% of the dimension in the up-down direction of the oil tank 33 from the upper end of the oil tank 33, or may be formed at a position that is within 20%. The oil return hole 63 is located upward relative to the axis 18c of the crank shaft 18.

As shown in FIG. 5, in the present embodiment, the oil return hole 63 is formed upward relative to a lower end 33id of the oil tank inlet 33i. Note that the lower end 33id of the oil tank inlet 33i corresponds to the lower end of the upper edge 23U of the partition side wall 23. The oil return hole 63 is formed upward relative to the lower end of the upper edge 23U of the partition side wall 23. The oil return hole 63 is formed downward relative to an upper end 33it of the oil tank inlet 33i. Note however that there is no particular limitation on the position of the oil return hole 63 relative to the lower end 33id and the upper end 33it of the oil tank inlet 33i.

The oil return hole 63 serves to return oil that flows over the oil tank 33 back into the first chamber 31. As indicated by an arrow B63 in FIG. 7, oil having flown into the first chamber 31 from the oil return hole 63 falls down to be collected in the oil pan 25.

The first side wall 21 is provided with a guide rib 65 protruding toward the first chamber 31. The guide rib 65 protrudes rightward from the first side wall 21. The guide rib 65 is formed so as to guide oil, which flows into the first chamber 31 from the oil return hole 63, into the oil pan 25. The guide rib 65 includes a first rib portion 65a arranged upward relative to a lower end 63d of the oil return hole 63, and a second rib portion 65b arranged at or below the lower end 63d of the oil return hole 63. The first rib portion 65a is arranged rearward of the oil return hole 63. The first rib portion 65a and the second rib portion 65b extend downward. The first rib portion 65a and the second rib portion 65b are connected together. The guide rib 65 includes a third rib portion 65c extending downward and rearward. The second rib portion 65b and the third rib portion 65c are connected together.

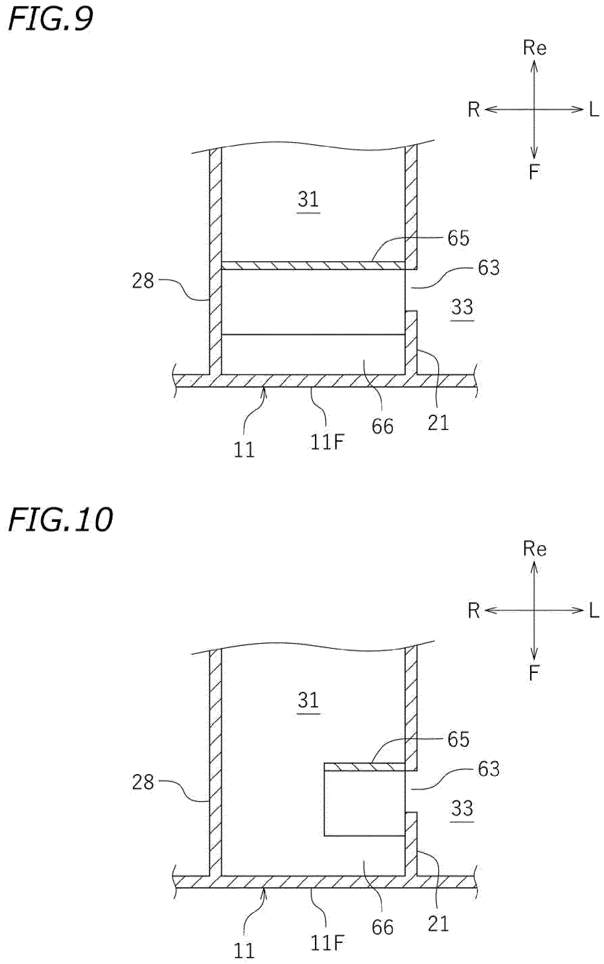

The front wall 11F and the lower wall 11D of the crank case 11 and the guide rib 65 together define an oil path 66 that connects together the oil return hole 63 and the oil pan 25. As schematically shown in FIG. 9, the crank case 11 includes another side wall 28 located rightward of the first side wall 21. The guide rib 65 may extend from the first side wall 21 to the other side wall 28. The guide rib 65 may be connected to, or in contact with, the other side wall 28. As shown in FIG. 10, the guide rib 65 may be spaced apart from the other side wall 28. The right end of the guide rib 65 may be located leftward relative to the other side wall 28.

As shown in FIG. 7, the oil pan 25 is formed of a portion of the bottom wall 26 of the crank case 11 that is depressed downward. A front end 25f of the oil pan 25 is located forward relative to the axis 18c of the crank shaft 18. A rear end 25b of the oil pan 25 is located rearward relative to the axis 18c of the crank shaft 18. The oil return hole 63 is formed forward relative to the axis 18c of the crank shaft 18. The guide rib 65 extends from a position forward relative to the axis 18c of the crank shaft 18 to a position rearward relative to the axis 18c of the crank shaft 18.

The crank shaft 18 includes the crank web 18A. A lower end 65d of the guide rib 65 is located downward relative to the crank web 18A. Note that the crank web 18A moves following the rotation of the crank shaft 18. As used herein, "being located downward relative to the crank web 18A" means being located downward relative to the crank web 18A having moved to the most downward position. The lower end 65d of the guide rib 65 is located downward relative to the upper end of the oil pan 25. The lower end 65d of the guide rib 65 is arranged upward relative to the inlet 45i of the intake path 45.

In the present embodiment, the lower end 65d of the guide rib 65 coincides with the rear end of the guide rib 65. The lower end 65d of the guide rib 65 is located rearward relative to the front end 25f of the oil pan 25. The lower end 65d of the guide rib 65 is located rearward relative to the foremost end of the crank web 18A. The lower end 65d of the guide rib 65 is located forward relative to the rear end 25b of the oil pan 25. The lower end 65d of the guide rib 65 is located forward relative to the rearmost end of the crank web 18A. The lower end 65d of the guide rib 65 is located forward relative to the intake chamber 45A. The lower end 65d of the guide rib 65 is located rearward relative to the middle position between the front end 25f of the oil pan 25 and the intake chamber 45A for the front-rear direction.

The engine 10 is configured as described above. Next, oil circulation in the engine 10 will be described. Note that in the following description, upstream side refers to the side from which oil flows. Downstream side refers to the side toward which oil flows.

The oil pan 25 stores oil therein. As indicated by an arrow in FIG. 8, oil in the oil pan 25 is sucked into the scavenge pump 40 through the intake path 45. The scavenge pump 40 transfers oil to the auxiliary tank 34 through the discharge path 46. Oil, which has been transferred to the auxiliary tank 34, flows upward in the auxiliary tank 34 and flows into the oil tank 33 through the oil tank inlet 33i.

In the present embodiment, oil is not directly transferred from the discharge path 46 to the oil tank 33. Oil is once transferred to the auxiliary tank 34, and then transferred to the oil tank 33. The flow path cross-sectional area of the auxiliary tank 34 is larger than the flow path cross-sectional area of the discharge path 46. The flow velocity of oil is relatively high in the discharge path 46, but it is relatively low in the auxiliary tank 34. Before oil flows into the oil tank 33, the flow velocity of oil decreases. Therefore, oil slowly flows into the oil tank 33 from the auxiliary tank 34. This suppresses a rapid flow of oil into the oil tank 33. This suppresses mixing of bubbles in oil in the oil tank 33.

The auxiliary tank 34 has a gas-liquid separation function. Even if bubbles are mixed in the oil transferred from the discharge path 46, oil and air are separated from each other in the auxiliary tank 34. Oil, from which air has been separated, flows into the oil tank 33. This suppresses mixing of bubbles in oil in the oil tank 33.

Oil in the oil tank 33 is sucked into the feed pump 50 through the oil path 47. The feed pump 50 supplies oil to the sliding parts 49 of the engine 10 through the oil path 48. After lubricating the sliding parts 49, oil returns to the oil pan 25 to be stored in the oil pan 25.

Now, if the oil tank 33 becomes full, the internal pressure of the oil tank 33 increases. In that case, there is a high load on the scavenge pump 40. According to the present embodiment, however, the oil return hole 63 is formed in the oil tank 33. When the amount of oil transferred to the oil tank 33 temporarily becomes large, oil in the oil tank 33 flows out through the oil return hole 63. Therefore, it is possible to avoid the oil tank 33 becoming full. This suppresses the load on the scavenge pump 40 from becoming high.

As shown in FIG. 7, oil, which has flown into the first chamber 31 from the oil tank 33 through the oil return hole 63, is guided to the oil pan 25 by the guide rib 65. This suppresses scattering of oil, which has flown over the oil tank 33, in the first chamber 31. Oil, which has flown over the oil tank 33, is smoothly guided into the oil pan 25.

Next, various advantageous effects realized by the engine 10 according to the present embodiment will be described.

As described above, if oil rapidly flows into the oil tank 33, bubbles may be mixed in oil flowing into the oil tank 33. With the engine 10 according to the present embodiment, however, the auxiliary tank 34 is provided upstream of the oil tank 33. The flow velocity of oil decreases in the auxiliary tank 34. This suppresses a rapid flow of oil into the oil tank 33. Gas-liquid separation is performed in the auxiliary tank 34. Therefore, it is possible to suppress mixing of bubbles in oil in the oil tank 33. It is possible to more stably supply oil to the sliding parts 49 from the feed pump 50.

According to the present embodiment, the opening area of the oil tank inlet 33i is larger than the opening area of the auxiliary tank inlet 34i. The flow velocity of oil when passing through the oil tank inlet 33i is lower than the flow velocity of oil when passing through the auxiliary tank inlet 34i. The flow velocity when oil flows into the oil tank 33 is lower than the flow velocity when oil flows out of the discharge path 46. This suppresses a rapid flow of oil into the oil tank 33. It is possible to suppress mixing of bubbles in oil in the oil tank 33.

According to the present embodiment, the auxiliary tank 34 is formed so that the flow path cross-sectional area A34 of the auxiliary tank 34 increases gradually in the upward direction. The auxiliary tank 34 is formed so that the flow path cross-sectional area A34 of the auxiliary tank 34 increases gradually toward the oil tank inlet 33i. Therefore, the flow velocity of oil decreases gradually in the upward direction. The flow velocity of oil decreases gradually toward the oil tank inlet 33i. This further suppresses a rapid flow of oil into the oil tank 33. It is possible to further suppress mixing of bubbles in oil in the oil tank 33.

According to the present embodiment, the oil tank 33 and the auxiliary tank 34 are partitioned from each other by the partition side wall 23. The partition side wall 23 is formed of the gasket 24 sandwiched between the crank case 11 and the crank case cover 20. According to the present embodiment, it is possible to easily form the oil tank 33 and the auxiliary tank 34.

According to the present embodiment, the front wall 11F of the crank case 11 defines a part of the oil tank 33. The front wall 20F of the crank case cover 20 defines a part of the auxiliary tank 34. When the motorcycle 1 runs, wind blows, coming from the front side, the front wall 11F of the crank case 11 and the front wall 20F of the crank case cover 20. Therefore, oil inside the oil tank 33 and the auxiliary tank 34 can be cooled by the wind generated while running.

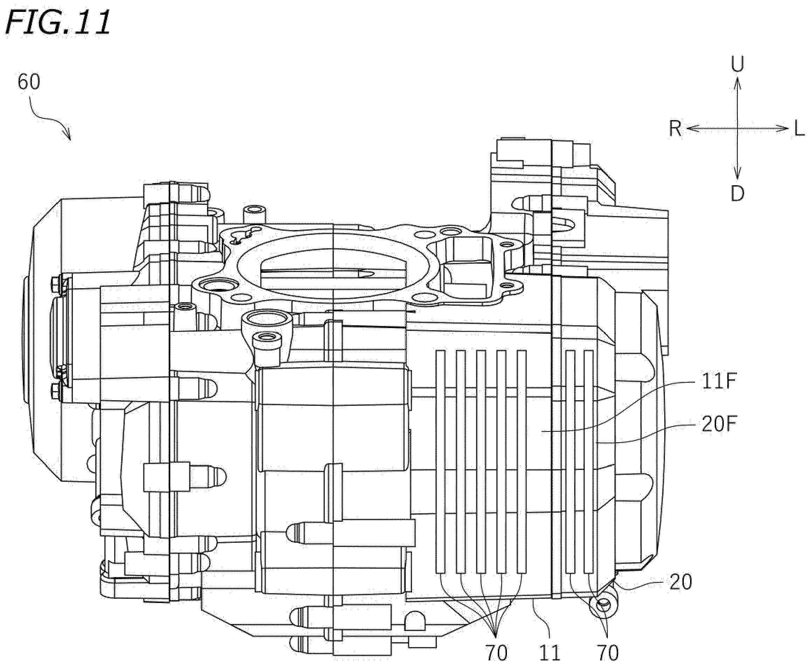

Note that in order to increase the cooling efficiency, cooling fins 70 may be provided on the front wall 11F of the crank case 11 and/or the front wall 20F of the crank case cover 20 as shown in FIG. 11. The cooling fins 70 extend forward. The cooling fins 70 may extend upward and downward, or may extend leftward and rightward. There is no particular limitation on the shape, arrangement and number of the cooling fins 70. By providing the cooling fins 70 as described above, oil inside the oil tank 33 and/or the auxiliary tank 34 can be more efficiently cooled by the wind generated while the motorcycle 1 runs.

While one embodiment has been described above, the embodiment is merely an example. Various other embodiments are possible.

The first side wall 21, the partition side wall 23 and the second side wall 22 do not always need to be arranged next to each other in the left-right direction. For example, the first side wall 21, the partition side wall 23 and the second side wall 22 may be arranged next to each other in the front-rear direction.

The opening area of the auxiliary tank inlet 34i may be equal to or greater than the opening area of the oil tank inlet 33i.

The flow path cross-sectional area A34 of the auxiliary tank 34 does not need to increase gradually in the upward direction. The flow path cross-sectional area A34 of the auxiliary tank 34 does not need to increase gradually toward the oil tank inlet 33i.

The partition side wall 23 does not need to be formed of the gasket 24. The partition side wall 23 may be formed of the crank case 11 or the crank case cover 20, for example.

The oil tank inlet 33i does not need to be formed upward of the partition side wall 23. The partition side wall 23 may extend upward to the upper wall 11U of the crank case 11 or the upper wall 20U of the crank case cover 20. The oil tank inlet 33i may run through the partition side wall 23 at a position downward relative to the upper end of the partition side wall 23.

The first side wall 21, the second side wall 22 and the partition side wall 23 do not need to extend perpendicular to the axis 18c of the crank shaft 18.

The oil tank 33 and the auxiliary tank 34 do not need to be arranged next to the generator 19. There is no particular limitation on the positions of the oil tank 33 and the auxiliary tank 34.

One or both of the oil tank 33 and the auxiliary tank 34 does not need to be formed in the front portion of the engine 10. The front wall 11F of the crank case 11 does not need to define a part of the oil tank 33. The front wall 20F of the crank case cover 20 does not need to define a part of the auxiliary tank 34.

A straddled vehicle refers to a vehicle that is straddled by the rider. The straddled vehicle is not limited to the motorcycle 1. The straddled vehicle may be an auto tricycle, an ATV (All Terrain Vehicle), or a snowmobile, for example.

### Reference Signs List

1: Motorcycle (straddled vehicle), 10: Internal combustion engine, 11: Crank case, 11F: Front wall (first front wall), 11Br: Vertical wall (first vertical wall), 18: Crank shaft, 18c: Axis of crank shaft, 19: Generator, 20: Crank case cover, 20F: Front wall (second front wall), 20Br: Vertical wall (second vertical wall), 21: First side wall, 22: Second side wall, 23: Partition side wall, 25: Oil pan, 26: Bottom wall, 33: Oil tank, 33i: Oil tank inlet, 34: Auxiliary tank, 34i: Auxiliary tank inlet, 40: Scavenge pump, 41: Intake port (first intake port), 42: Discharge port, 50: Feed pump, 51: Intake port (second intake port), 70: Cooling fin

## Claims

1. An internal combustion engine (10) comprising:
a crank case (11) having a first side wall (21) and a bottom wall (26) that defines an oil pan (25);
a crank case cover (20) having a second side wall (22) arranged sideward of the first side wall (21) of the crank case (11); and
a partition side wall (23) arranged between the first side wall (21) of the crank case (11) and the second side wall (22) of the crank case cover (20), wherein:
an oil tank (33) is formed between the first side wall (21) and the partition side wall (23);
an auxiliary tank (34) is formed between the second side wall (22) and the partition side wall (23);
an oil tank inlet (33i) that connects together the auxiliary tank (34) and the oil tank (33) is formed between the first side wall (21) and the second side wall (22); and
the internal combustion engine (10) includes a scavenge pump (40) having a first intake port (41) that communicates with the oil pan (25) and a discharge port (42) that communicates with the auxiliary tank (34); and
the internal combustion engine (10) includes a feed pump (50) having a second intake port (51) that communicates with the oil tank (33).

2. The internal combustion engine (10) according to claim 1, wherein:
the auxiliary tank (34) has an auxiliary tank inlet (34i) that communicates with the discharge port (42) of the scavenge pump (40); and
an opening area of the oil tank inlet (33i) is larger than an opening area of the auxiliary tank inlet (34i).

3. The internal combustion engine (10) according to claim 1 or 2, wherein the auxiliary tank (34) is formed so that a flow path cross-sectional area (A34) of the auxiliary tank (34) increases gradually toward the oil tank inlet (33i).

4. The internal combustion engine (10) according to any one of claims 1 to 3, wherein the partition side wall (23) is formed of a gasket (24) sandwiched between the crank case (11) and the crank case cover (20).

5. The internal combustion engine (10) according to any one of claims 1 to 4, the internal combustion engine (10) is configured to be arranged within a straddled vehicle, wherein the oil tank inlet (33i) is formed upward of the partition side wall (23) with regard to an vehicle up-down direction (U-D).

6. The internal combustion engine (10) according to claim 5, wherein the auxiliary tank (34) is formed so that a flow path cross-sectional area (A34) of the auxiliary tank (34) increases gradually in an upward direction with regard to the vehicle up-down direction (U-D).

7. The internal combustion engine (10) according to any one of claims 1 to 6, wherein:
the internal combustion engine (10) includes a crank shaft (18) rotatably supported on the crank case (11); and
the first side wall (21), the second side wall (22) and the partition side wall (23) are perpendicular to an axis (18c) of the crank shaft (18).

8. The internal combustion engine (10) according to claim 7, wherein:
the internal combustion engine (10) includes a generator (19) connected to an end portion of the crank shaft (18);
the crank case (11) has an arc-shaped first vertical wall (11Br) located outward in a radial direction of the generator (19) as viewed from an axis direction of the crank shaft (18);
the crank case cover (20) has an arc-shaped second vertical wall (20Br) located outward in the radial direction of the generator (19) as viewed from the axis direction of the crank shaft (18);
the first vertical wall (11Br) defines a part of the oil tank (33); and
the second vertical wall (20Br) defines a part of the auxiliary tank (34).

9. A straddled vehicle (1) comprising an internal combustion engine (10) according to any one of claims 1 to 8.

10. The straddled vehicle (1) according to claim 9, wherein:
the crank case (11) has a first front wall (11F);
the crank case cover (20) has a second front wall (20F);
the first front wall (11F) defines a part of the oil tank (33); and
the second front wall (20F) defines a part of the auxiliary tank (34).

11. The straddled vehicle (1) according to claim 10, comprising cooling fins (70) provided on the first front wall (11F) of the crank case (11) and/or the second front wall (20F) of the crank case cover (20).

## Patentansprüche

1. Ein Verbrennungsmotor (10), der umfasst
ein Kurbelgehäuse (11), das eine erste Seitenwand (21) und eine Bodenwand (26), die eine Ölwanne (25) definiert, hat;
eine Kurbelgehäuseabdeckung (20), die eine zweite Seitenwand (22), die seitlich der ersten Seitenwand (21) des Kurbelgehäuses (11) angeordnet ist, hat; und
eine Trennseitenwand (23), die zwischen der ersten Seitenwand (21) des Kurbelgehäuses (11) und der zweiten Seitenwand (22) der Kurbelgehäuseabdeckung (20) angeordnet ist, wobei:
ein Öltank (33) zwischen der ersten Seitenwand (21) und der Trennseitenwand (23) ausgebildet ist;
ein Zusatztank (34) zwischen der zweiten Seitenwand (22) und der Trennseitenwand (23) ausgebildet ist;
ein Öltankeinlass (33i), der den Zusatztank (34) und den Öltank (33) miteinander verbindet, zwischen der ersten Seitenwand (21) und der zweiten Seitenwand (22) ausgebildet ist; und
der Verbrennungsmotor (10) eine Spülpumpe (40) enthält, die eine erste Einlassöffnung (41), die mit der Ölwanne (25) in Verbindung steht, und eine Auslassöffnung (42), die mit dem Zusatztank (34) in Verbindung steht, hat; und
der Verbrennungsmotor (10) eine Förderpumpe (50) enthält, die eine zweiten Ansaugöffnung (51) hat, die mit dem Öltank (33) verbunden ist.

2. Der Verbrennungsmotor (10) gemäß Anspruch 1, wobei:
der Zusatztank (34) einen Zusatztankeinlass (34i) hat, der mit der Auslassöffnung (42) der Spülpumpe (40) in Verbindung steht; und
eine Öffnungsfläche des Öltankeinlasses (33i) größer ist als eine Öffnungsfläche des Zusatztankeinlasses (34i).

3. Der Verbrennungsmotor (10) gemäß Anspruch 1 oder 2, wobei der Zusatztank (34) ausgebildet ist, so dass eine Strömungsweg-Querschnittsfläche (A34) des Zusatztanks (34) in Richtung des Öltankeinlasses (33i) allmählich zunimmt.

4. Der Verbrennungsmotor (10) gemäß irgendeinem der Ansprüche 1 bis 3, wobei die Trennseitenwand (23) aus einer Dichtung (24) gebildet ist, die zwischen dem Kurbelgehäuse (11) und der Kurbelgehäuseabdeckung (20) angeordnet ist.

5. Der Verbrennungsmotor (10) gemäß irgendeinem der Ansprüche 1 bis 4, der Verbrennungsmotor (10) ist konfiguriert, so dass er in einem Spreiz-Sitz-Fahrzeug angeordnet wird, wobei der Öltankeinlass (33i) in Bezug auf eine Fahrzeug-Auf-AbRichtung (U-D) oberhalb der Trennseitenwand (23) ausgebildet ist.

6. Der Verbrennungsmotor (10) gemäß Anspruch 5, wobei der Zusatztank (34) ausgebildet ist, so dass eine Strömungsweg-Querschnittsfläche (A34) des Zusatztanks (34) allmählich in einer Aufwärtsrichtung in Bezug auf die Fahrzeug-Auf-Ab-Richtung (U-D) zunimmt.

7. Der Verbrennungsmotor (10) gemäß irgendeinem der Ansprüche 1 bis 6, wobei:
der Verbrennungsmotor (10) eine Kurbelwelle (18) enthält, die drehbar an dem Kurbelgehäuse (11) gelagert ist; und
die erste Seitenwand (21), die zweite Seitenwand (22) und die Trennseitenwand (23) senkrecht zu einer Achse (18c) der Kurbelwelle (18) sind.

8. Der Verbrennungsmotor (10) gemäß Anspruch 7, wobei:
der Verbrennungsmotor (10) einen Generator (19) enthält, der mit einem Endabschnitt der Kurbelwelle (18) verbunden ist;
das Kurbelgehäuse (11) eine bogenförmige erste vertikale Wand (11Br) hat, die von einer Achsrichtung der Kurbelwelle (18) aus gesehen in einer radialen Richtung des Generators (19) nach außen liegt;
die Kurbelgehäuseabdeckung (20) eine bogenförmige zweite vertikale Wand (20Br) hat, die von einer Achsrichtung der Kurbelwelle (18) aus gesehen in einer radialen Richtung des Generators (19) nach außen liegt;
die erste vertikale Wand (11Br) einen Teil des Öltanks (33) definiert; und
die zweite senkrechte Wand (20Br) einen Teil des Zusatztanks (34) definiert.

9. Ein Spreiz-Sitz-Fahrzeug (1), das einen Verbrennungsmotor (10) gemäß irgendeinem der Ansprüche 1 bis 8 umfasst.

10. Das Spreiz-Sitz-Fahrzeug (1) gemäß Anspruch 9, wobei:
das Kurbelgehäuse (11) eine erste Vorderwand (11F) hat;
die Kurbelgehäuseabdeckung (20) eine zweite Vorderwand (20F) hat;
die erste Vorderwand (11F) einen Teil des Öltanks (33) definiert; und
die zweite Vorderwand (20F) einen Teil des Zusatztanks (34) definiert.

11. Das Spreiz-Sitz-Fahrzeug (1) gemäß Anspruch 10, das Kühlrippen (70) umfasst, die an der ersten Vorderwand (11F) des Kurbelgehäuses (11) und/oder der zweiten Vorderwand (20F) der Kurbelgehäuseabdeckung (20) vorgesehen sind.

## Revendications

1. Moteur à combustion interne (10) comprenant :
un carter de vilebrequin (11) ayant une première paroi latérale (21) et une paroi inférieure (26) qui définit un collecteur d'huile (25) ;
un couvercle de carter de vilebrequin (20) ayant une seconde paroi latérale (22) disposée sur le côté de la première paroi latérale (21) du carter de vilebrequin (11) ; et
une paroi latérale de partition (23) disposée entre la première paroi latérale (21) du carter de vilebrequin (11) et la seconde paroi latérale (22) du couvercle de carter de vilebrequin (20) :
une cuve d'huile (33) étant formée entre la première paroi latérale (21) et la paroi latérale de partition (23) ;
une cuve auxiliaire (34) étant formée entre la seconde paroi latérale (22) et la paroi latérale de partition (23) ;
un orifice d'entrée de cuve d'huile (33i) qui raccorde ensemble la cuve auxiliaire (34) et la cuve d'huile (33) est formé entre la première paroi latérale (21) et la seconde paroi latérale (22) ; et
le moteur à combustion interne (10) inclut une pompe de récupération (40) ayant un premier orifice d'entrée (41) qui communique avec le collecteur d'huile (25) et un orifice d'évacuation (42) qui communique avec la cuve auxiliaire (34) ; et
le moteur à combustion interne (10) inclut une pompe d'alimentation (50) ayant un second orifice d'entrée (51) qui communique avec la cuve d'huile (33).

2. Moteur à combustion interne (10) selon la revendication 1 :
la cuve auxiliaire (34) ayant un orifice d'entrée de cuve auxiliaire (34i) qui communique avec l'orifice d'évacuation (42) de la pompe de récupération (40) ; et
une zone d'ouverture de l'orifice d'entrée de la cuve d'huile (33i) étant supérieure à une zone d'ouverture de l'orifice d'entrée de la cuve auxiliaire (34i).

3. Moteur à combustion interne (10) selon la revendication 1 ou 2, la cuve auxiliaire (34) étant formée afin qu'une zone transversale de trajet d'écoulement (A34) de la cuve auxiliaire (34) augmente progressivement vers l'orifice d'entrée de la cuve d'huile (33i).

4. Moteur à combustion interne (10) selon l'une quelconque des revendications 1 à 3, la paroi latérale de partition (23) étant formée d'un joint d'étanchéité (24) pris en sandwich entre le carter de vilebrequin (11) et le couvercle de carter de vilebrequin (20).

5. Moteur à combustion interne (10) selon l'une quelconque des revendications 1 à 4, le moteur à combustion interne (10) étant conçu pour être agencé à l'intérieur d'un véhicule à enfourcher, l'orifice d'entrée de cuve d'huile (33i) étant formé vers le haut de la paroi latérale de partition (23) par rapport à un sens de véhicule haut-bas (U-D).

6. Moteur à combustion interne (10) selon la revendication 5, la cuve auxiliaire (34) étant formée afin qu'une zone transversale de trajet d'écoulement (A34) de la cuve auxiliaire (34) augmente progressivement dans un sens vers le haut par rapport au sens de véhicule haut-bas (U-D).

7. Moteur à combustion interne (10) selon l'une quelconque des revendications 1 à 6 :
le moteur à combustion interne (10) incluant un vilebrequin (18) supporté de manière à pouvoir tourner sur le carter de vilebrequin (11) ; et
la première paroi latérale (21), la seconde paroi latérale (22) et la paroi latérale de partition (23) étant perpendiculaires à un axe (18c) du vilebrequin (18).

8. Moteur à combustion interne (10) selon la revendication 7 :
le moteur à combustion interne (10) incluant un générateur (19) raccordé à une portion d'extrémité du vilebrequin (18) ;
le carter de vilebrequin (11) ayant une première paroi verticale (11Br) en forme d'arc localisée vers l'extérieur dans un sens radial du générateur (19) tel que visualisé depuis un sens de l'axe du vilebrequin (18) ;
le couvercle de carter de vilebrequin (20) ayant une seconde paroi verticale (20Br) en forme d'arc localisée vers l'extérieur dans le sens radial du générateur (19) tel que visualisé depuis le sens de l'axe du vilebrequin (18) ;
la première paroi verticale (11Br) définissant une partie de la cuve d'huile (33) ; et
la seconde paroi verticale (20Br) définissant une partie de la cuve auxiliaire (34).

9. Véhicule à enfourcher (1) comprenant un moteur à combustion interne (10) selon l'une quelconque des revendications 1 à 8.

10. Véhicule à enfourcher (1) selon la revendication 9 :
le carter de vilebrequin (11) ayant une première paroi avant (11F) ;
le couvercle de carter de vilebrequin (20) ayant une seconde paroi avant (20F) ;
la première paroi avant (11F) définissant une partie de la cuve d'huile (33) ; et
la seconde paroi avant (20F) définissant une partie de la cuve auxiliaire (34).

11. Véhicule à enfourcher (1) selon la revendication 10, comprenant des ailettes de refroidissement (70) prévues sur la première paroi avant (11F) du carter de vilebrequin (11) et/ou la seconde paroi avant (20F) du couvercle de carter de vilebrequin (20).
